# EUROPEAN PATENT SPECIFICATION

(11) **EP 3 434 396 B1**
(45) Date of publication and mention of the grant of the patent: **21.10.2026**
(21) Application number: 18185256.7
(22) Date of filing: 24.07.2018
(51) Int. Cl.: B22F 5/00, B22F 5/04, B22F 10/28, B22F 12/45, B33Y 10/00, B33Y 30/00, B33Y 70/00, C22C 1/04, C22C 33/02, B22F 10/32, B22F 10/66, B22F 10/68, B22F 10/73, B22F 12/17, B22F 12/41, B22F 12/43, B22F 12/52, B22F 12/63

(54) **PRE-FUSION LASER SINTERING FOR METAL POWDER STABILIZATION DURING ADDITIVE MANUFACTURING**
PRÄFUSIONSLASERSINTERN ZUR METALLPULVERSTABILISIERUNG WÄHREND DER GENERATIVEN FERTIGUNG
FRITTAGE LASER PRÉ-FUSION POUR LA STABILISATION DES POUDRES MÉTALLIQUES PENDANT LA FABRICATION D'ADDITIFS

(30) Priority: 24.07.2017 US 201715658127
(43) Date of publication of application: 30.01.2019
(73) Proprietor: RTX Corporation, Farmington, CT 06032 (US)
(72) Inventor: TWELVES, Wendell V., Glastonbury, CT Connecticut 06033 (US); FURRER, David Ulrich, Marlborough, CT Connecticut 06447 (US)
(74) Representative: Dehns

(56) References cited:
- WO-A1-2014/095208
- US-A1- 2015 064 048
- US-A1- 2016 167 160

## Description

### BACKGROUND

This invention relates generally to the field of additive manufacturing and more particularly to a powder-based additive manufacturing system with a feature designed to stabilize the powder composition during melting.

Traditional additive manufacturing systems include, for example, additive layer manufacturing (ALM) devices, such as direct metal laser sintering (DMLS), selective laser melting (SLM), laser beam melting (LBM) and electron beam melting (EBM) that provide for the fabrication of complex metal, alloy, ceramic and composite structures by a layer-by-layer freeform construction of a workpiece. The principle behind additive manufacturing processes involves the selective melting of atomized precursor powder beds by a directed energy source, producing a lithographic buildup of the workpiece. The melting of the powder occurs in a small localized region of the energy beam, producing small volumes of melting, called melt pools, followed by rapid solidification, allowing for very precise control of the solidification process in the layer-by-layer fabrication of the workpiece. These devices are directed by three dimensional geometry solid models developed in computer aided design (CAD) software systems.

The DMLS, SLM, and LBM systems utilize a laser as the energy source and the EBM system utilizes an electron beam gun. Both system beam types are focused by a lens, then deflected by a rotating mirror or an electromagnetic scanner so that the energy beam selectively impinges on a powder bed. The DMLS, SLM, and LBM systems utilize a focused laser beam scanned by a rotating mirror and the EBM system uses a beam of electrons focused with electromagnetic lenses that scan the powder bed. The powder is melted at the energy focus site on the build surface or substrate. The strategy of the scanning, power of the energy beam, resonance time or speed, and sequence of melting are directed by an imbedded computer aided design system (CAD). The precursor powder is either gravitationally fed from cassettes or loaded by a piston so that it can be raked onto the build table. The excess powder is raked off and collected for reapplication. Since the energy beam source may be fixed, the build table may lower with each successive layer so that the work piece is built upon the underlying pre-solidified layer beneath.

Because of the high concentration of energy in the melt pools, thermally driven turbulence on the surface of the powder bed can cause, for example, powder or liquid loss from the melt pools which can lead to, for example, an inconsistent layer.

A prior art method of forming a metal component having the features of the preamble of claim 1 is disclosed in WO 2014/095 208 A1.

US 2017/106593 A1 discloses an additive manufacturing system according to the state of the art wherein a gentle sintering run on heat-fusible particles is followed closely by a selective laser melting run.

### SUMMARY

In an aspect of the present invention, a method of forming a metal component as provided in accordance with claim 1.

In another embodiment, an apparatus for forming a metal component is provided in accordance with claim 9.

### BRIEF DESCRIPTION OF THE DRAWINGS

FIG. 1 is a schematic view of an additive manufacturing system.
FIG. 2 is a schematic view of the interaction between a directed energy beam and a powder layer in the vicinity of a melt pool during an additive manufacturing process of the prior art.
FIG. 3 is a schematic view of the interaction between a directed low energy beam, a directed high energy beam and a powder layer in the vicinity of a melt pool during an additive manufacturing process of a disclosed embodiment of the present invention.

### DETAILED DESCRIPTION

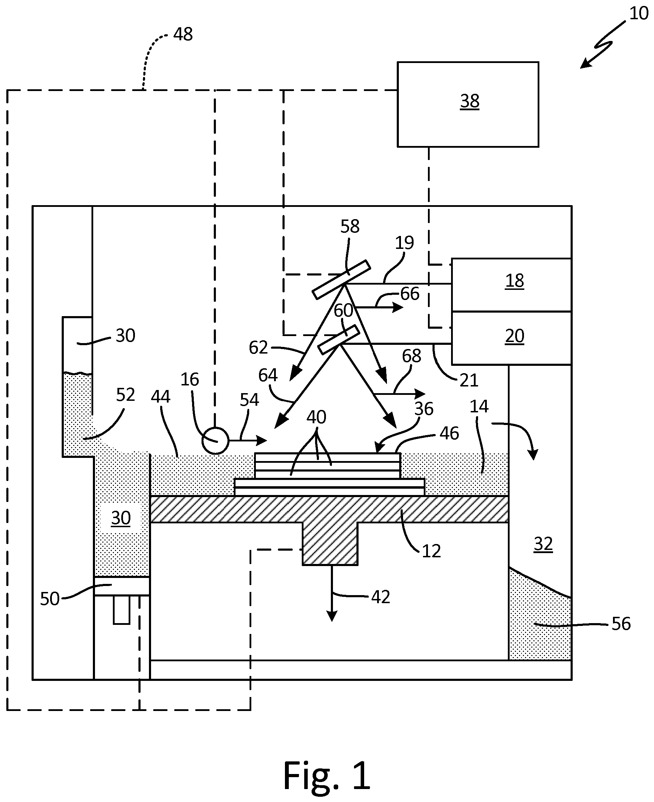

Directed energy beam powder bed additive manufacturing processes typically employ a directed energy beam heat source to create a molten melt pool from powder feed stock. In an embodiment, the powder may be a metal powder, such as a nickel base, cobalt base, iron base, superalloy powder or mixtures thereof or titanium alloy powder. In the process, solid, three-dimensional parts are created in a layer by layer build. An example is shown in FIG. 1. FIG. 1 schematically illustrates additive manufacturing system 10 according to one non-limiting example of the present disclosure that may have a build table 12 for holding a powder bed 14 over build table 12, a particle spreader or wiper 16 for spreading powder bed 14 over build table 12, directed energy guns 18 and 20 for selectively heating and melting regions of a layer of powder bed 14, a powder supply hopper 30 for supplying powder to spreader 16 and a powder surplus hopper 32. Additive manufacturing system 10 may be configured to build a workpiece 36 in a layer-by-layer fashion.

A controller 38 can include an integral CAD system for modeling and/or dividing the workpiece 36 into a plurality of slices 40 additively built atop one other generally in a vertical or Z coordinate direction (see arrow 42). Once manufactured, each solidified slice 40 corresponds to a layer 44 of the powder bed 14 prior to solidification. Layer 44 is placed on top of a build surface 46 of the previously solidified slice 40. Controller 38 generally operates the entire system through a series of electrical and/or digital signals 48 sent to the system 10 components. For instance, controller 38 may send a signal 48 to mechanical piston 50 of supply hopper 30 to sequentially push a supply of powder 52 upward for receipt by spreader 16, or alternatively or in addition thereto, supply hopper 30 may feed powder downward via gravity. Spreader 16 may be a wiper, roller or other device that pushes (see arrow 54) or otherwise places the supply powder 52 over build surface 46 of workpiece 36 by a predetermined thickness established through downward movement (see arrow 42) of build table 12 controlled by controller 38. Any excess powder 56 may be pushed into the surplus hopper 32 by spreader 16. It is further contemplated and understood that layer 44 may take the form of any substrate that may be laid or applied across build surface 46 in preparation for melting.

Once a substantially level powder layer 44 is established over build surface 46, controller 38 may send a signal 48 to the directed energy guns 18 and 20 and associated mirror systems 58 and 60 to activate and generally move energy beams 62 and 64 along top layer 44 at a controlled velocity and controlled direction (see arrows 66 and 68) and thereby selectively melt top layer 44 on a region by region basis into melt pools.

In a non-limiting embodiment, energy guns 18 and 20 may be fixed sources of energy beams 19 and 21 that are deflected and focused by moveable physical or electronic mirror systems 58 and 60 respectively.

In another non-limiting embodiment, energy guns 18 and 20 may be mounted on a moveable carrier that may physically traverse the area of workpiece 36 and perform the same function as schematic deflecting and focusing systems 58 and 60.

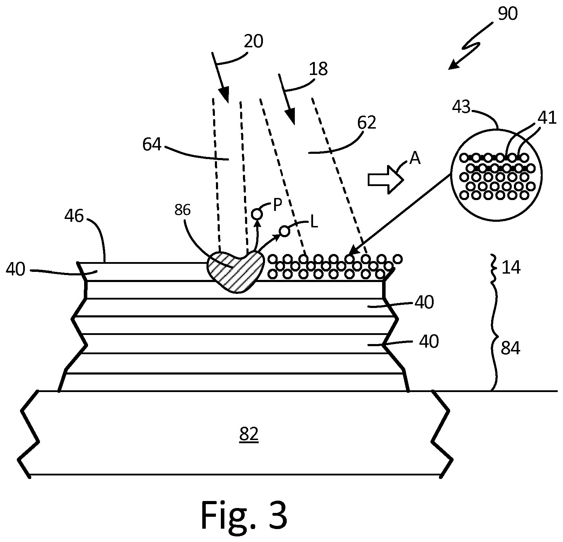

It is further contemplated and understood that energy beams 19 and 21 may be laser beams, electron beams or any other energy beams capable of heating the powder to sufficient temperatures and at sufficient rates to perform the necessary function of forming a melt pool and, following solidification, a weld bead. For instance, beams with shorter wavelengths may heat up the powder faster than beams with longer wavelengths. Different optical frequencies or wavelengths typically require different types of laser; for example, CO₂ lasers, diode lasers, and fiber lasers. However, to preselect the best wavelength (and thus laser type) for heating and/or melting, the wavelength selected can be based on the composition of the metal powder, for example. That is, particles of a powder can have different heat absorption rates, impacting melting rates and solidification rates. Moreover, and besides wavelength, other properties of the beam may be a factor. For instance, pulsed laser beams or continuous laser beams can be desired to melt the powder. It is also understood that the two energy source devices 18 and 20 may perform different functions. In an embodiment, for example, the embodiment of Fig. 3, energy source device 18 may be a relatively low power device and energy source device 20 may be a high power device. One device may be used to preheat a desired region to be melted and the other device may be used to form a small melt pool in the preheated region. As discussed later, this flexibility provides a major justification of the present invention. In other embodiments, both energy sources may be focused at the same time on the same region, if necessary.

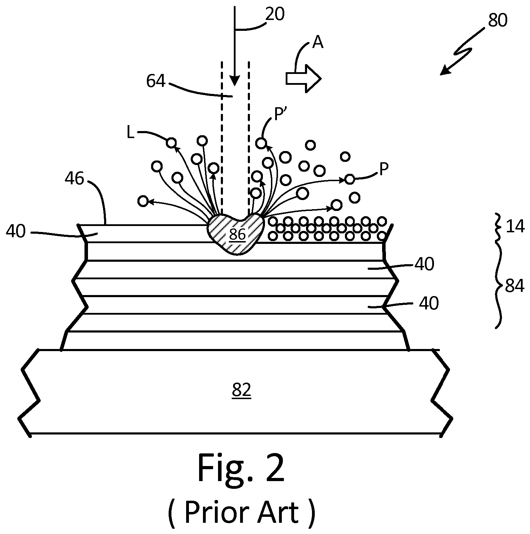

A schematic view of the interaction between a directed energy beam and a powder layer in the vicinity of a melt pool during an additive manufacturing process of the prior art is shown in Fig. 2. Energy beam powder bed additive manufacturing process 80 comprises powder layer 14 on solidified multi-layer component 84 comprising solidified layers 40 on work table 82. High energy direct energy beam 64 from directed energy source 20 focused on powder layer 14 has sufficient energy to melt powder layers 14 to form melt pool 86. As indicated by arrow A, directed energy beam 64 is moving from left to right in the process of creating a portion of layer 40 (i.e. a weld bead) as the result of solidification of melt pool 86. For direct energy beam powder bed additive manufacturing processes operating in an inert atmosphere and illustrated in Figs. 1 and 2, high energy x-ray videos have revealed that the sudden temperature rise of the melt pool, adjacent gas generated, and metal vaporization from the surface of the melt pool and weld bead, create thermally driven gas currents of sufficient turbulence and velocity to physically lift and relocate local metal powder particles P from powder layer 14 as well as liquid droplets L from the surface of melt pool 86. The movement of particles P and liquid droplets L are schematically illustrated by arrows in Fig. 2, and this material may or may not reenter the melt pool to restore alloy integrity of the solidified weld bead. This is a matter of considerable concerns in systems where the precursor powder composition is mixed and not chemically and/or physically homogeneous.

The above mentioned hot gas current driven disturbance of the metal powder particles negatively impacts the consistency of weld bead 40 in a number of ways. The number of metal powder particles available to feed local melt pool 86 may vary in an inconsistent manner. Lighter metal powder particles may be more readily displaced by the air currents than heavier particles. Because the particle size distribution varies in a random manner in each layer of powder 14, the number of particles that may be displaced away from the melt pool is constantly changing direction as directed energy beam 64 moves along the scan path. Both the volume and temperature of the melt pool are, therefore, subject to variation. In addition, the thermally driven air currents may be complex in nature. Some of the metal powder particles P and liquid droplets L may be pushed radially away from the melt pool. Other metal particles P' may be lifted but are captured by recirculating gas flow structures and partially melted as they pass through the laser beam and are either deposited on the weld bead or on the surrounding powder bed as shown in Fig. 2. These partially melted particles may subsequently create flaws in the form of local porosity and other forms of imperfection.

A solution to the problem of lack of alloy consistency and other issues resulting from thermal disturbance of powder layer 14 during passage of directed energy beam 64 to form molten pool 86 is to physically stabilize powder layer 14 before the layer is impacted by energy beam 64. Such a system is shown in Fig. 3. Powder layer 14 can be physically stabilized against disturbance by lightly bonding particles together in the top region of layer 14 by a mild sintering operation. More specifically, a relatively low power directed energy beam 62 is employed to stabilize the top region of layer 14 by performing a partial sintering operation ahead of melt pool 86. Directed energy beam powder bed additive manufacturing process 90 comprises powder layer 14 on solidified multilayer component 84 comprising pre-solidified layers 40 on work table 82. Low power directed energy beam 62 from directed energy source 18 (shown in Fig. 1) and high power directed energy beam 64 from directed energy source 20 (shown in Fig. 1) are focused on powder layer 14 and moving in direction of arrow A. Low power directed energy beam 62 has sufficient energy to lightly sinter the top layers of layer 14 as schematically indicated by dark spots 41 at contact points between particles in enlarged inset 43 in Fig. 3. The partially-sintered top portion of layer 14 is a "skull" layer. The skull layer is part of layer 14 that is lightly sintered into a feature that is spaced apart from the fully-formed solidified layer 40. Thus, the skull layer is not yet connected to solidified layer 40 and there are metal powder particles positioned between solidified layer 40 and the skull layer. To further the fabrication of the skull layer, each powder particle can include a coating with a lower sintering temperature than the bulk of each powder particle.

In the dual-beam embodiment shown in Figs. 1 and 3, high energy directed energy beam 64 from directed energy source 20 is focused on powder layer 14 and is moving in the direction of arrow A behind low energy directed energy beam 62 from low energy source 18. High energy directed energy beam 64 is forming melt pool 86 from powder layer 14 (including the skull layer) that solidifies to form part of solidified layer 40 in the form of a weld bead. The effect of the skull layer is schematically illustrated by ejection of few if any particles P or liquid droplets L in the vicinity of melt pool 86. Low energy directed energy beam 62 has a wider focal region to maximize the size of the sintered region in front of the focal point of high energy directed energy beam 64 to minimize the formation of particles and droplets ejected from molten pool 86.

In the embodiment shown in Fig. 3, two separate directed energy beams perform the function of sintering the skull layer of layer 14 before forming melt pool 86. In another embodiment, both functions could be formed by a single beam operating at two power levels and focal settings as the beam traverses across the surface of powder layer 14 on a scan path. The function of the low powered directed energy beam is to partially sinter to bond the metal particles in the top region of powder layer 14 ahead of and on both sides of the fusion melt pool scan path. The intent of this function is to provide a physically and chemically consistent volume of metal to melt pool 86 and to eliminate the deposition of partially melted powder particles in or on the weld bead.

In one embodiment, high energy directed energy beam 64 can raise the temperature of molten pool 86 to twice that of top layers 14 as they are sintered by low energy directed energy beam 62. In addition to and/or instead of having energy sources 18 and 20 be of differing power, source 18 can produce low energy directed energy beam 62 that moves faster than, is wider than, and/or has a smaller pulse width than high energy directed energy beam 64. In such an embodiment, only one energy source can be used to create both directed energy beams 62 and 64.

After the layers of component 84 are completed, component 84 can be blasted to remove any sintered powder that may be clinging to component 84 due to the formation of the skull layers. This finishing process can occur, for example, using the same powder that was used to make component 84 to avoid contamination of surplus hopper 32 (shown in Fig. 1), allowing reuse of excess powder 56 (shown in Fig. 1). In some instances, additional finishing steps can be performed to remove stray sintered powder from component 84, for example, ultrasonic vibration, grit blasting, water jetting, abrasive brushing, rotary abrasion, or other abrasive processes.

While the invention has been described with reference to an exemplary embodiment(s), it will be understood by those skilled in the art that various changes may be made without departing from the scope of the invention as defined in the appended claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A method of forming a metal component (84) comprising:
forming a first layer (14) of metal powder on a work surface (82);
heating firstly a first region of a top surface of the first layer (14) with a first directed energy beam (62) having a first diameter and a first energy to a temperature at which the metal powder at or near the top surface is sintered to form a first skull on the first layer (14) to encapsulate the metal powder in the first region to prevent powder loss during a second heating step;
heating secondly a spot of the first region of the first layer (14) to a temperature at or above the melting point of the metal powder with a second directed energy beam (64) having a second diameter and a second energy higher than the first energy to form a first molten pool (86);
heating thirdly a second region of the top surface of the first layer (14) adjacent the first molten pool (86) with the first directed energy beam (62) to a temperature at which the metal powder at or near the top surface is sintered to form a second skull on the first layer (14) to encapsulate the metal powder in the second region to prevent powder loss during a fourth heating step;
heating fourthly a spot of the second region of the first layer (14) to a temperature at or above the melting point of the metal powder with the second directed energy beam (64) to form a second molten pool (86) adjacent the first molten pool (86);
repeating the third and fourth heating steps until the top surface of the first layer (14) comprises a fused surface (40);
forming a second layer (14) of metal powder on the first layer (14); and
repeating the four heating steps, the repeating step, and the forming step until the metal component (84) is formed,
**characterised in that**:
in each of the repeated first and third heating steps, the first and second skulls are spaced apart from the fused surface (40) formed in the previous steps such that they are not connected to the fused surface (40) and there are metal powder particles positioned between the fused surface (40) and both skulls.

2. The method of claim 1, wherein the first diameter is from 1.0 mm to 10.0 mm.

3. The method of claim 1 or 2, wherein the second diameter is from 0.1 mm to 1.0 mm.

4. The method of claim 1, 2 or 3, wherein the metal powder comprises a nickel base, cobalt base, iron base superalloy or mixtures thereof or a titanium alloy.

5. The method of any preceding claim, wherein the method is performed in an inert atmosphere or a vacuum.

6. The method of any preceding claim, wherein a source (18) of the first directed energy beam and a source (20) of the second directed energy beam are mounted on separate fixtures.

7. The method of any of claims 1 to 5, wherein a source (18) of the first directed energy beam source and a source (20) of the second directed energy beam are mounted on a single fixture.

8. The method of any preceding claim, wherein a thickness of the first layer (14) is from 10 µm to 150 µm.

9. The method of any preceding claim, wherein the metal component (84) comprises an aircraft turbine component (84).

10. An apparatus for forming a metal component (84) from alloy powder comprising:
a powder-based layer-by-layer directed energy beam additive manufacturing system (10); and
an energy beam source or sources (18, 20) configured to produce a primary directed energy beam (64) having a first energy and a secondary directed energy beam (62) having a second energy lower than the first energy,
**characterized by**:
a controller (38) configured to operate the additive manufacturing system (10) and the energy beam sources (18, 20) to carry out the method of claim 1.

11. The apparatus of claim 10, wherein the primary directed energy beam (64) is a laser (64) with a beam diameter of from 0.1 mm to 1.0 mm.

12. The apparatus of claim 10 or 11, wherein the secondary directed energy beam (62) is a laser (62) with a beam diameter of 1.0 mm to 10.0 mm.

13. The apparatus of claim 10, 11 or 12, wherein the energy beam sources (18, 20) comprise a primary directed energy beam source (20) and a secondary directed energy beam source (18), and the primary directed energy beam source (20) and the secondary directed energy beam source (18) are pulsed or continuous lasers.

14. The apparatus of any of claims 10 to 13, further comprising a chamber having an inert atmosphere or a vacuum for forming the metal component (84) in.

## Patentansprüche

1. Verfahren zum Ausbilden eines Metallbauteils (84), umfassend:
Ausbilden einer ersten Schicht (14) aus Metallpulver auf einer Arbeitsoberfläche (82);
erstens Erwärmen eines ersten Bereichs einer oberen Oberfläche der ersten Schicht (14) mit einem ersten, einen ersten Durchmesser und eine erste Energie aufweisenden gerichteten Energiestrahl (62) auf eine Temperatur, bei der das Metallpulver an oder nahe der oberen Oberfläche gesintert wird, um einen ersten Bären auf der ersten Schicht (14) auszubilden, um das Metallpulver in dem ersten Bereich zu ummanteln, um Pulververlust während eines zweiten Erwärmungsschritts zu verhindern;
zweitens Erwärmen einer Stelle des ersten Bereichs der ersten Schicht (14) auf eine Temperatur an oder über dem Schmelzpunkt des Metallpulvers mit einem zweiten, einen zweiten Durchmesser und eine zweite Energie, die größer als die erste Energie ist, aufweisenden gerichteten Energiestrahl (64), um ein erstes Schmelzbad (86) auszubilden;
drittens Erwärmen eines zweiten, zu dem ersten Schmelzbad (86) benachbarten Bereichs der oberen Oberfläche der ersten Schicht (14) mit dem ersten gerichteten Energiestrahl (62) auf eine Temperatur, bei der das Metallpulver an oder nahe der oberen Oberfläche gesintert wird, um einen zweiten Bären auf der ersten Schicht (14) auszubilden, um das Metallpulver in dem zweiten Bereich zu ummanteln, um Pulververlust während eines vierten Erwärmungsschritts zu verhindern;
viertens Erwärmen einer Stelle des zweiten Bereichs der ersten Schicht (14) auf eine Temperatur an oder über dem Schmelzpunkt des Metallpulvers mit dem zweiten gerichteten Energiestrahl (64), um ein zweites Schmelzbad (86) benachbart zu dem ersten Schmelzbad (86) auszubilden;
Wiederholen des dritten und des vierten Erwärmungsschritts, bis die obere Oberfläche der ersten Schicht (14) eine verschmolzene Oberfläche (40) umfasst;
Ausbilden einer zweiten Schicht (14) aus Metallpulver auf der ersten Schicht (14); und
Wiederholen der vier Erwärmungsschritte, des Wiederholungsschritts und des Ausbildungsschritts, bis das Metallbauteil (84) ausgebildet ist,
**dadurch gekennzeichnet, dass**:
in jedem der wiederholten ersten und dritten Erwärmungsschritte der erste und der zweite Bär derart von der in den vorherigen Schritten ausgebildeten verschmolzenen Oberfläche (40) beabstandet sind, dass sie nicht mit der verschmolzenen Oberfläche (40) verbunden sind und Metallpulverpartikel zwischen der verschmolzenen Oberfläche (40) und beiden Bären positioniert sind.

2. Verfahren nach Anspruch 1, wobei der erste Durchmesser im Bereich von 1,0 mm bis 10,0 mm liegt.

3. Verfahren nach Anspruch 1 oder 2, wobei der zweite Durchmesser in einem Bereich von 0,1 mm bis 1,0 mm liegt.

4. Verfahren nach Anspruch 1, 2 oder 3, wobei das Metallpulver eine Nickelbasis-, Kobaltbasis-, Eisenbasissuperlegierung oder Mischungen davon oder eine Titanlegierung umfasst.

5. Verfahren nach einem der vorhergehenden Ansprüche, wobei das Verfahren in einer inerten Atmosphäre oder einem Vakuum ausgeführt wird.

6. Verfahren nach einem der vorhergehenden Ansprüche, wobei eine Quelle (18) des ersten gerichteten Energiestrahls und eine Quelle (20) des zweiten gerichteten Energiestrahls auf separaten Einrichtungen montiert sind.

7. Verfahren nach einem der Ansprüche 1 bis 5, wobei eine Quelle (18) des ersten gerichteten Energiestrahls und eine Quelle (20) des zweiten gerichteten Energiestrahls auf einer einzigen Einrichtung montiert sind.

8. Verfahren nach einem der vorhergehenden Ansprüche, wobei eine Dicke der ersten Schicht (14) in einem Bereich von 10 µm bis 150 µm liegt.

9. Verfahren nach einem der vorhergehenden Ansprüche, wobei das Metallbauteil (84) ein Luftfahrzeugturbinenbauteil (84) umfasst.

10. Vorrichtung zum Ausbilden eines Metallbauteils (84) aus Legierungspulver, umfassend:
ein pulverbasiertes, schichtweise arbeitendes generatives Fertigungssystem (10) mit gerichtetem Energiestrahl; und
eine Energiestrahlquelle oder Energiestrahlquellen (18, 20), die ausgelegt sind, um einen eine erste Energie aufweisenden primären gerichteten Energiestrahl (64) und einen eine zweite Energie, die geringer als die erste Energie ist, aufweisenden sekundären gerichteten Energiestrahl (62) zu erzeugen,
**gekennzeichnet durch**:
eine Steuerung (38), die ausgelegt ist, um das generative Fertigungssystem (10) und die Energiestrahlquellen (18, 20) zu betreiben, um das Verfahren nach Anspruch 1 durchzuführen.

11. Vorrichtung nach Anspruch 10, wobei der primäre gerichtete Energiestrahl (64) ein Laser (64) mit einem Strahldurchmesser in einem Bereich von 0,1 mm bis 1,0 mm ist.

12. Vorrichtung nach Anspruch 10 oder 11, wobei der sekundäre gerichtete Energiestrahl (62) ein Laser (62) mit einem Strahldurchmesser im Bereich von 1,0 mm bis 10,0 mm ist.

13. Vorrichtung nach Anspruch 10, 11 oder 12, wobei die Energiestrahlquellen (18, 20) eine Quelle (20) eines primären gerichteten Energiestrahls und eine Quelle (18) eines sekundären gerichteten Energiestrahls umfassen und die Quelle (20) des primären gerichteten Energiestrahls und die Quelle (18) des sekundären gerichteten Energiestrahls gepulste oder kontinuierliche Laser sind.

14. Vorrichtung nach einem der Ansprüche 10 bis 13, ferner umfassend eine Kammer, die eine inerte Atmosphäre oder ein Vakuum zum Ausbilden des Metallbauteils (84) aufweist.

## Revendications

1. Procédé de formation d'un composant métallique (84) comprenant :
la formation d'une première couche (14) de poudre métallique sur une surface de travail (82) ;
premièrement, le chauffage d'une première région d'une surface supérieure de la première couche (14) avec un premier faisceau d'énergie dirigée (62) ayant un premier diamètre et une première énergie à une température à laquelle la poudre métallique à la surface supérieure ou près de celle-ci est frittée pour former un premier crâne sur la première couche (14) afin d'encapsuler la poudre métallique dans la première région pour éviter la perte de poudre lors d'une deuxième étape de chauffage ;
deuxièmement, le chauffage d'une zone de la première région de la première couche (14) à une température égale ou supérieure au point de fusion de la poudre métallique avec un second faisceau d'énergie dirigée (64) ayant un second diamètre et une seconde énergie supérieure à la première énergie pour former un premier bain fondu (86) ;
troisièmement, le chauffage d'une seconde région de la surface supérieure de la première couche (14) adjacente au premier bain fondu (86) avec le premier faisceau d'énergie dirigée (62) à une température à laquelle la poudre métallique à la surface supérieure ou près de celle-ci est frittée pour former un second crâne sur la première couche (14) afin d'encapsuler la poudre métallique dans la seconde région pour éviter la perte de poudre lors d'une quatrième étape de chauffage ;
quatrièmement, le chauffage d'un point de la seconde région de la première couche (14) à une température égale ou supérieure au point de fusion de la poudre métallique avec le second faisceau d'énergie dirigée (64) pour former un second bain de fusion (86) adjacent au premier bain de fusion (86) ;
la répétition des troisième et quatrième étapes de chauffage jusqu'à ce que la surface supérieure de la première couche (14) comprenne une surface fondue (40) ;
la formation d'une seconde couche (14) de poudre métallique sur la première couche (14) ; et
la répétition des quatre étapes de chauffage, de l'étape de répétition et de l'étape de formation jusqu'à ce que le composant métallique (84) soit formé,
**caractérisé en ce que** :
dans chacune des première et troisième étapes de chauffage répétées, les premier et second crânes sont espacés de la surface fondue (40) formée dans les étapes précédentes, de telle sorte qu'ils ne soient pas reliés à la surface fondue (40) et qu'il y ait des particules de poudre métallique positionnées entre la surface fondue (40) et les deux crânes.

2. Procédé selon la revendication 1, dans lequel le premier diamètre est compris entre 1,0 mm et 10,0 mm.

3. Procédé selon la revendication 1 ou 2, dans lequel le second diamètre est compris entre 0,1 mm et 1,0 mm.

4. Procédé selon la revendication 1, 2 ou 3, dans lequel la poudre métallique comprend un superalliage à base de nickel, à base de cobalt, à base de fer ou des mélanges de ceux-ci ou un alliage de titane.

5. Procédé selon une quelconque revendication précédente, dans lequel le procédé est mis en œuvre sous atmosphère inerte ou sous vide.

6. Procédé selon une quelconque revendication précédente, dans lequel une source (18) du premier faisceau d'énergie dirigé et une source (20) du second faisceau d'énergie dirigé sont montées sur des dispositifs séparés.

7. Procédé selon l'une quelconque des revendications 1 à 5, dans lequel une source (18) de la première source de faisceau d'énergie dirigée et une source (20) de la seconde source de faisceau d'énergie dirigée sont montées sur un seul dispositif.

8. Procédé selon une quelconque revendication précédente, dans lequel l'épaisseur de la première couche (14) est comprise entre 10 µm et 150 µm.

9. Procédé selon une quelconque revendication précédente, dans lequel le composant métallique (84) comprend un composant de turbine d'aéronef (84).

10. Appareil pour former un composant métallique (84) à partir de poudre d'alliage comprenant :
un système de fabrication additive par faisceau d'énergie dirigée couche par couche à base de poudre (10) ; et
une ou plusieurs sources de faisceaux d'énergie (18, 20) configurée(s) pour produire un faisceau d'énergie dirigé primaire (64) ayant une première énergie et un faisceau d'énergie dirigé secondaire (62) ayant une seconde énergie inférieure à la première énergie,
**caractérisé par** :
un contrôleur (38) configuré pour faire fonctionner le système de fabrication additive (10) et les sources de faisceau d'énergie (18, 20) pour réaliser le procédé selon la revendication 1.

11. Appareil selon la revendication 10, dans lequel le faisceau d'énergie dirigée primaire (64) est un laser (64) avec un diamètre de faisceau compris entre 0,1 mm et 1,0 mm.

12. Appareil selon la revendication 10 ou 11, dans lequel le faisceau d'énergie dirigée secondaire (62) est un laser (62) avec un diamètre de faisceau compris entre 1,0 mm et 10,0 mm.

13. Appareil selon la revendication 10, 11 ou 12, dans lequel les sources de faisceau d'énergie (18, 20) comprennent une source de faisceau d'énergie dirigée primaire (20) et une source de faisceau d'énergie dirigée secondaire (18), et la source de faisceau d'énergie dirigée primaire (20) et la source de faisceau d'énergie dirigée secondaire (18) sont des lasers pulsés ou continus.

14. Appareil selon l'une quelconque des revendications 10 à 13, comprenant en outre une chambre ayant une atmosphère inerte ou un vide pour former le composant métallique (84) à l'intérieur.
